# EUROPEAN PATENT APPLICATION

(11) **EP 2 492 482 A1**
(43) Date of publication of application: **29.08.2012**
(21) Application number: 10824716.4
(22) Date of filing: 02.08.2010
(51) Int. Cl.: F02F 3/00, F02F 3/22, F16J 9/00, F16J 10/02

(54) **PISTON AND ENGINE**

(30) Priority: 19.10.2009 JP 2009240566
(71) Applicant: Niigata Power Systems Co., Ltd., Tokyo 104-0028 (JP)
(72) Inventor: GOTO, Satoru, Ota-city Gunma 373-0847 (JP); HASHIMOTO, Toru, Ota-city Gunma 373-0847 (JP); WATANABE, Koichi, Ota-city Gunma 373-0847 (JP)
(74) Representative: Greenwood, John David
(86) International application number: PCT/JP2010/063442
(87) International publication number: WO 2011/048864

(57) **Abstract**

A piston is provided in which the amount of uncombusted and discharged air-fuel mixture is small, and agglutination of a piston ring due to heat is prevented.

In a piston 2 in which plural peripheral grooves in which piston rings are provided are formed in an outer peripheral surface, as the relation between an inner diameter B of a cylinder 1 and a distance L between an upper surface of the piston and an upper surface of a top peripheral groove 4a, L/B ≤ 0.1 holds. A cooling chamber 5a is formed in close vicinity to the top peripheral groove. A dead volume S partitioned with the piston, a cylinder liner 11 and a top piston ring 3a is reduced, and the amount of air-fuel mixture enclosed here and discharged in uncombusted state is reduced. Further, agglutination of the top piston ring to the cylinder due to thermal load can be prevented with the cooling chamber 5a. The thermal efficiency as an engine is improved in comparison with conventional art.

## Description

### TECHNICAL FIELD

The present invention relates to a piston, in which the amount of air-fuel mixture discharged as uncombusted gas due to a so-called dead volume in a cylinder is small, and the possibility of agglutination of a piston ring due to thermal load is reduced, and further, excellent thermal efficiency is obtained, and to an engine having the piston.

### BACKGROUND ART

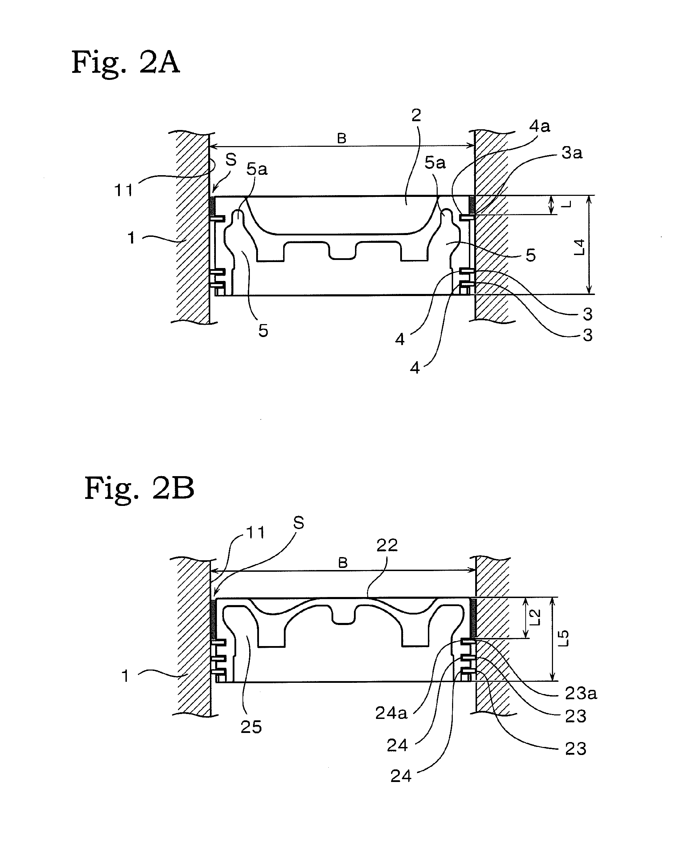

Fig. 2(b) is a cross-sectional diagram of a cylinder 1, a part of the structure of which is omitted, in a conventional engine. Plural (three in the example of the figure) piston rings 23 are provided for the role to maintain airtightness and prevent back flow of lubricant oil in the cylinder 1. That is, plural (three in the example of the figure) peripheral grooves 24 are formed in the outer peripheral surface of the piston 22, and the piston rings 23 are attached movably and in slidable contact with a cylinder liner 11, to the peripheral grooves.

Among these piston rings 23, a position L2 of a peripheral groove 24a for a top ring 23a provided in the top position is conventionally formed in an approximately half position of a height L5 of the piston 22 (this is a position corresponding to approximate 20% with respect to a diameter of the cylinder). The other two peripheral grooves 24 and the piston rings 23 are provided below this position. Since there is lubricant oil around the perimeter of the piston rings 23, when the lubricant oil is carbonized due to heat by combustion in the cylinder 1 and is heaped up between the top ring 23a and the peripheral groove 24a, the top ring 23a might be agglutinated and disabled to move. To prevent this inconvenience, from a point of empirical and technical view, the position L2 of the peripheral groove 24a for the top ring 23a is brought to the position approximately half of the height L5 of the piston 22 (as described above, the position corresponding to approximate 20% with respect to the diameter of the cylinder) as described above.

The following patent literature 1 discloses the structure of a piston as described above.

### Citation List

### Patent Literature

Patent Literature 1: Japanese Published Unexamined Patent Application No. 2005-194971

### DISCLOSURE OF THE INVENTION

### Technical Problem

According to the structure of the conventional piston as described above, as indicated as a gray region in Fig. 2(b), a ring-shaped space S communicating with space in the cylinder 1 is formed among the piston 22, the cylinder liner 11 and the top ring 23a provided in the top position among the piston rings 23. Air-fuel mixture introduced in the cylinder 1 enters the space S when compressed in a compression stroke. In an expansion stroke, the flame is not propagated to the air-fuel mixture in the space S. The air-fuel mixture in the space S is not combusted but discharged in the cylinder 1 as uncombusted gas, and finally, discharged in an exhaust gas pipe in an exhaust stroke. This space, generally-called dead volume (hereinbelow, denoted by "S" as in the case of the above-described space), is a region structurally out of the reach of flame, and forms a part of a so-called quenching zone where combustion does not progress depending on flame state or the like in the cylinder 1.

The air-fuel mixture discharged as uncombusted gas due to the above-described dead volume includes, e.g., when city gas is used as fuel in a gas engine, about 90% methane. Accordingly, considering fuel economy and the global warming effect of methane, it can be said that suppression of uncombusted gas discharge is a social requirement.

However, the positions of the piston rings 23 in the conventional piston 22 are empirically and technically set for the purpose of preventing carbonization of lubricant oil due to heat by combustion and agglutination of the top ring 23a. The study on the relation between the positions of the piston rings 23 and the uncombusted gas discharge is not advanced. Conventionally, no particular proposal has been made about improvement of the dead volume S so as to prevent agglutination of the top ring 23a while suppressing the uncombusted gas discharge.

The idea of setting the position of the top ring 23a to a higher position to be closer to the combustion surface so as to reduce the dead volume S is possible as a paper plan. However, in a high output and high combustion pressure (e.g., about 15 MPa) industrial engine, it is apparent that such piston ring arrangement immediately causes agglutination due to thermal load of the piston rings 23. Accordingly, actually no verified example exists. There is no information on the relation between the positions of the piston rings 23 and the discharge of uncombusted gas as well as influence on the engine thermal efficiency.

The present invention has an object to solve the above-described conventional problem, and has an object to provide a piston in which the amount of air-fuel mixture enclosed in a so-called dead volume and discharged as uncombusted gas is small, and the possibility of agglutination of a piston ring due to thermal load is reduced, and further, thermal efficiency improved in comparison with the conventional art is obtained, and an engine having the piston.

### Solution to Problem

A piston described in claim 1 is,
a piston in which a plurality of peripheral grooves in which piston rings are provided are formed in an outer peripheral surface,
wherein as relation between an inner diameter B of a cylinder accommodating the piston and a distance L between an upper surface of the piston and an upper surface of a top peripheral groove, L/B ≤ 0.1 holds, and wherein a cooling chamber is formed in close vicinity to a top peripheral groove.

An engine described in claim 2 is,
an engine in which a piston where a piston ring is respectively attached to a plurality of peripheral grooves formed in an outer peripheral surface is slidably provided in a cylinder,
wherein as relation between an inner diameter B of the cylinder accommodating the piston and a distance L between an upper surface of the piston and an upper surface of the top peripheral groove, L/B ≤ 0.1 holds, and wherein a cooling chamber is formed in close vicinity to the top peripheral groove.

An engine described in claim 3 is,
in the engine, the engine is a gas engine having a break mean effective pressure Pme of 1.8 MPa or higher.

### Advantageous Effects of Invention

According to the piston described in claim 1 and the engine described in claim 2, the relation between the inner diameter B of the cylinder accommodating the piston and the distance L between the upper surface of the piston and the upper surface of the topmost peripheral groove is set so as to satisfy the condition L/B ≤ 0.1. Accordingly, the dead volume partitioned with the piston, the cylinder liner and the piston ring arranged in the top position is immediately reduced, and the amount of the air-fuel mixture enclosed here and discharged as uncombusted gas is reduced. Further, as the cooling chamber is formed inside the piston in close vicinity to the top peripheral groove, the probability of agglutination of the top piston ring, directly subjected to the heat in combustion, to the cylinder, due to thermal load, is reduced. Further, according to the above arrangement, it is apparent that the thermal efficiency as an engine is improved in comparison with the conventional art. Particularly, according to the engine in claim 3, even in a high-efficiency gas engine having Pme (brake mean effective pressure) equal to or higher than 1.8 MPa, the thermal efficiency can be improved at 0.7 or higher point.

### BRIEF DESCRIPTION OF DRAWINGS

Fig. 1(a) is a cross-sectional diagram of a piston according to an embodiment, and (b) is a cross-sectional diagram of a conventional piston;
Fig. 2(a) is a cross-sectional diagram of a cylinder having the piston according to the embodiment, and (b) is a cross-sectional diagram of a cylinder having the conventional piston;
Fig. 3 is a graph regarding the piston according to the embodiment and the conventional piston, showing the relation between a top ring groove position L and a dead volume ratio (%) with respect to combustion chamber volume;
Fig. 4 is a diagram showing crown parts of four types of pistons, installed in a practical-level engine cylinder and subjected to performance test; (a) is a cross-sectional diagram of the piston according to the embodiment, (b) is a cross-sectional diagram of the conventional piston, (c) is a cross-sectional diagram of a piston in a comparative example 1, and (d) is a cross-sectional diagram of a piston in a comparative example 2;
Fig. 5 is a schematic diagram showing a structure of the practical-level engine in which the respective pistons shown in Fig. 4 are installed;
Fig. 6 is a graph showing the result of the performance test performed using the engine shown in Fig. 4, and showing the relation between excess air ratio and thermal efficiency; and
Fig. 7 is a diagram showing the result of the performance test performed using the engine shown in Fig. 4 and a graph showing the relation between the excess air ratio and THC (Total Hydrocarbon) density in exhaust gas.

### BEST MODE FOR CARRYING OUT THE INVENTION

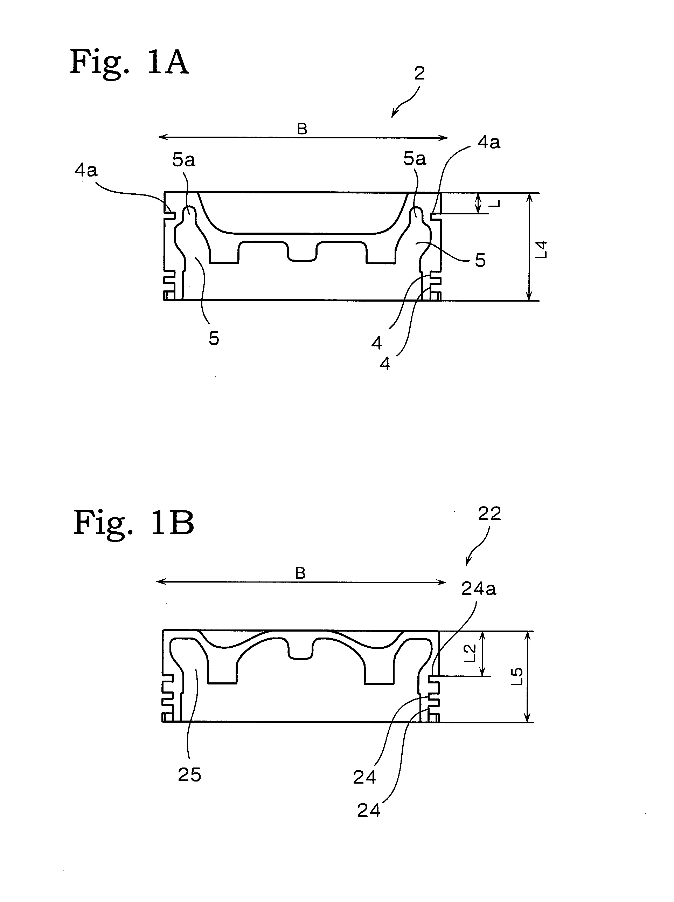

### 1. Structure of Embodiment Shown in Comparison with Conventional Art (Fig. 1 to Fig. 3)

Fig. 1(a) is a cross-sectional diagram showing a piston 2 of an industrial engine as an embodiment of the present invention having a break mean effective pressure Pme of 2 MPa. Fig. 1(b) is a cross-sectional diagram of a conventional piston 22 in a conventional industrial engine also having a break mean effective pressure Pme of 2 MPa.

Fig. 2(a) is a cross-sectional diagram showing a status where the piston 2 of the embodiment is in the cylinder 1. Fig. 2(b) is a cross-sectional diagram showing a status where the conventional piston 22 is in the cylinder 1.

Note that these pistons are combined pistons having a combination of a crown and a skirt. The crown parts are shown, and the skirt parts and connecting rod and the like are omitted.

The piston 2 of the embodiment shown in Fig. 1(a) and Fig. 2(a) is designed such that, assuming that the distance between an upper surface of the piston 2 and an upper surface of a top peripheral groove 4a is L, and the inner diameter of the cylinder 1 is B, the ratio of L to B, i.e., L/B is 0.07. That is, the top peripheral groove 4a is provided in a position in close vicinity to the top face of the piston 2, and other two peripheral grooves 4 and total two piston rings 3 respectively attached to these peripheral grooves 4 are provided in positions in close vicinity to a lower end of the piston 2.

On the other hand, in the piston 22 of the conventional art shown in Fig. 1(b) and Fig. 2(b), arrangement of three peripheral grooves 24 and total three piston rings 23 one-by-one attached to the respective peripheral grooves 24 is set as follows. That is, the piston is designed such that, assuming that the diameter of the piston 22 is B and the distance between an upper surface of the piston 22 and an upper surface of a top peripheral groove 24a, L2, L2/B = 0.17 holds. In this manner, in the piston 2 of the embodiment, the value of L/B is set to a smaller value in comparison with the conventional art.

Further, in the piston 2 of the embodiment shown in Fig. 1(a) and Fig. 2(a), as in the case of the conventional art shown in Fig. 1(b) and Fig. 2(b), it is arranged such that a hollow as a cooling chamber 5 is formed and opened downward in the piston 2, and lubricant oil is attached to the cooling chamber upon engine driving to produce a cooling effect. However, the cooling chamber 5 of the embodiment, unlike the cooling chamber 25 in the conventional art, has an upper cooling chamber 5a extended to a position in the close vicinity to the top peripheral groove 4a. The upper cooling chamber 5a, in which a lower part communicates with the cooling chamber 5 and an upper part extends upward above the upper surface of the top peripheral groove 4a, is opposite, with its entire surface, to a side surface of the top peripheral groove 4a, by a ring-shaped arrangement with a wall having a thickness about the depth of the groove therebetween. Accordingly, even when the top peripheral groove 4a and the top ring 3a attached to the peripheral groove receive high heat from combusted gas in engine combustion in a position close to the top face of the piston 2, they are effectively cooled with the cooling chamber 5 and the upper cooling chamber 5a over the entire perimeter, therefore inconvenience of agglutination of the piston ring 3 in the peripheral groove 4 with carbonized lubricant oil in this part can be infallibly prevented.

In the piston 2 of the embodiment shown in Fig. 2(a), L/B ≅ 0.07 holds as described above. Since the top peripheral groove 4a is provided in the position in close vicinity to the top face of the piston 2, the dead volume S indicated as a gray region in Fig. 2(a), i.e., the space among the piston 2, the cylinder liner 11 and the top ring 3a is narrower than L2/B = 0.17 in the piston 22 in the conventional art. Accordingly, the amount of air-fuel mixture compressed in the compression stroke to enter the deal volume S is smaller than that of the piston 22 of the conventional art described with reference to Fig. 2(b).

That is, in the piston 22 of the conventional art shown in Fig. 2(b), as described above, the L2/B value is greater in comparison with the embodiment. This means that the height of the dead volume S indicated as the gray region in the figure i.e. the distance between the upper surface of the top ring 23a and the top face of the piston 2 is long. Accordingly, the amount of air-fuel mixture compressed in the compression stroke in the engine of the conventional art to enter the dead volume S in the cylinder 1 is greater than that in the piston 2 of the embodiment described with reference to Fig. 2(a).

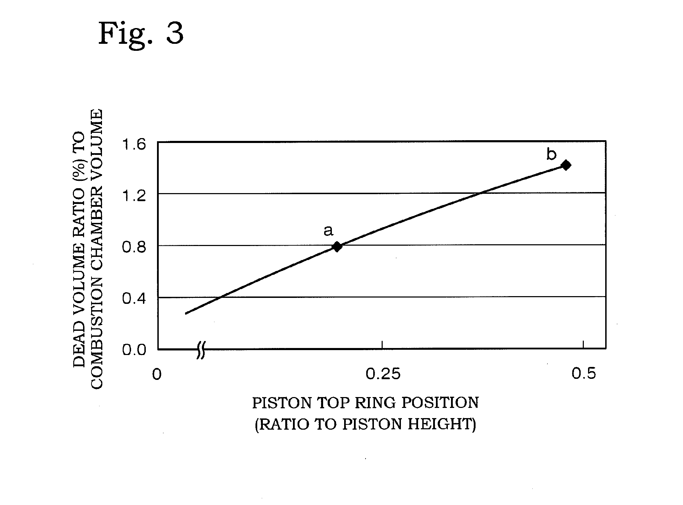

Accordingly, the amount of fuel mixture in the dead volume S, to which the flame is not propagated in the expansion stroke and which is discharged as uncombusted gas in the cylinder 1 and emitted in the exhaust gas pipe in the exhaust stroke, in the embodiment, is smaller in comparison with the conventional art. In this example, the comparison is made on the presumption that the both engines are the same output level engines having the same cylinder diameter. However, as shown in Fig. 3, as the positions of the top ring are different, the ratio of the dead volume S with respect to the combustion chamber volume in the engine of the conventional art (point b) is 1.4%, while the ratio in the engine of the embodiment (point a) is 0.8%. The ratio of the dead volume S with respect to the combustion chamber volume is reduced in accordance with reduction of the position L of the top ring. Although the details will be described in the following clause based on particular experimental data, in accordance with reduction of the ratio of the dead volume S with respect to the combustion chamber volume, the volume of discharged uncombusted gas is reduced.

In this manner, according to the piston 2 of the embodiment and the engine having the piston, since the position of the top ring 3a is in the vicinity of the top face of the piston 2, the dead volume S is reduced and the volume of discharged uncombusted gas can be reduced. Further, as the cooling chamber 5 in the piston 2 is extended to the position in close vicinity to the peripheral groove 4a of the top ring 3a as the upper cooling chamber 5a so as to sufficiently cool the top ring 3a and the peripheral groove 4a, the agglutination of the top ring 3a in the peripheral groove 4a can be infallibly prevented.

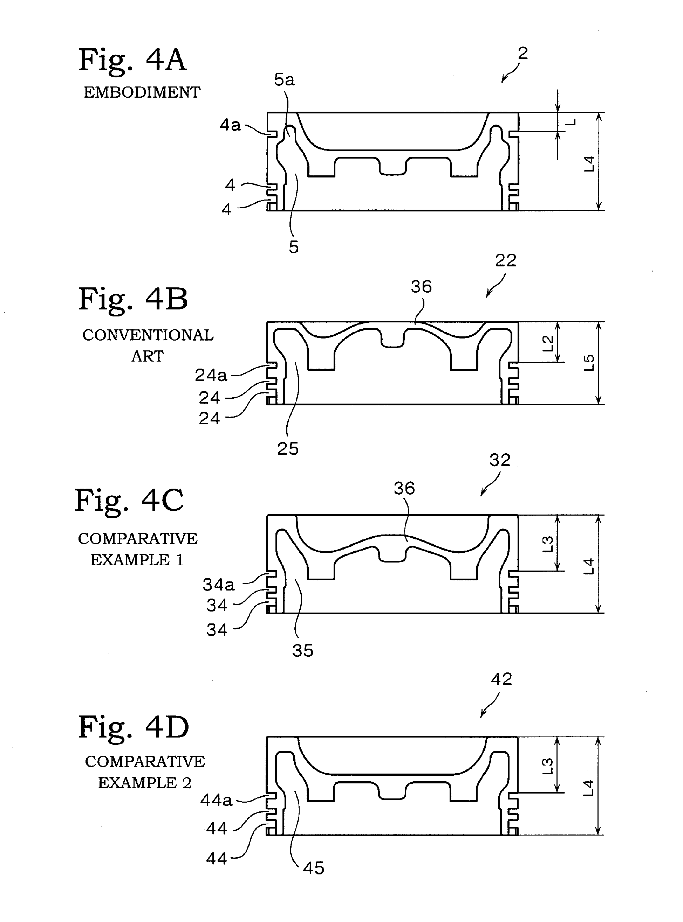

### 2. Comparison of Engine Performance (Figs. 4 to 7)

Next, the result of comparison of engine performance by actually installing the piston 2 of the embodiment and the piston 22 of the conventional art in practical-level engines and running the engines will be described.

Fig. 4 shows the respective crowns of four types of pistons used in this comparison experiment: (a) is a cross-sectional diagram of the piston 2 of the embodiment; (b) is a cross-sectional diagram of the piston 22 of the conventional art; and (c) is a cross-sectional diagram of a piston 32 of a comparison example 1. The piston 32 of the comparison example 1 has a height L4 the same as that of the piston 2 of the embodiment. However, peripheral grooves 34 and piston rings (not shown) are positioned in a lower half part as in the case of the conventional art, and further, a convex member 36 as in the case of the conventional art is provided on the top face. (d) is a cross-sectional diagram of a piston 42 of a comparison example 2. The piston 42 of the comparative example 2 has the height L4 the same as that of the piston 2 of the embodiment. However, peripheral grooves 44 and piston rings (not shown) are positioned in a lower half part as in the case of the conventional art, and further, the top face has a convex-shaped structure approximately the same as that of the embodiment.

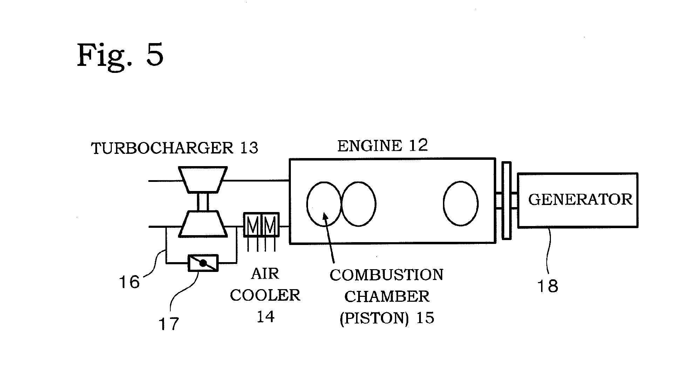

The engine 12 as a practical-level engine shown in Fig. 5 is a six-cylinder gas engine having a cylinder diameter of 220 mm, a rated output of 1070 kW/1000 min⁻¹, and a break mean effective pressure Pme of 2 MPa. The engine 12 is provided with a turbocharger 13. The exhaust from the engine 12 drives a turbine of the turbocharger 13, which drives a compressor to compress the air, to take the air via an air cooler 14 into a combustion chamber 15 of the engine 12. The turbocharger 13 is provided with a by-pass line 16 and a valve 17 to control a by-pass amount on the air intake side so as to control an intake amount. The engine 12 drives a generator 18.

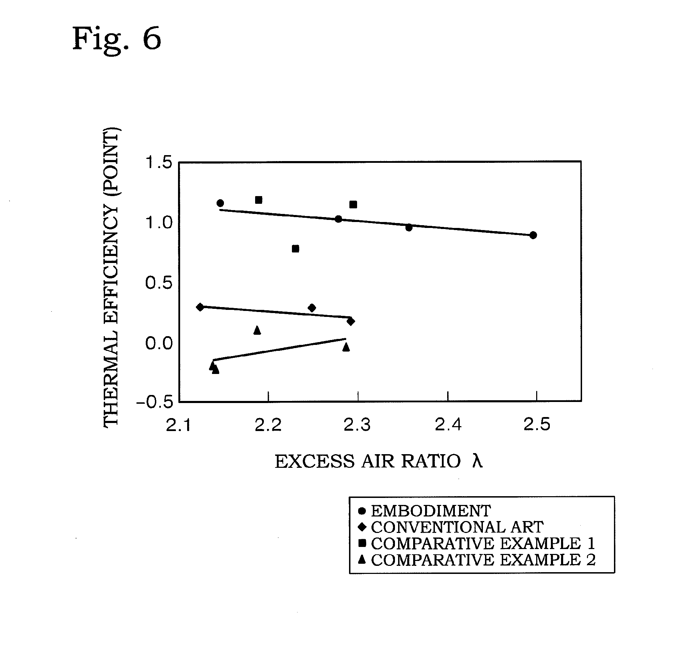

Fig. 6 shows a thermal efficiency point with respect to excess air ratio. For example, when a reference thermal efficiency is 50% and a measured thermal efficiency is 52%, 2 point is displayed. As shown in Fig. 6, according to the engine of the embodiment (indicated with a black dot), in comparison with the conventional art and the comparative examples 1 and 2, the thermal efficiency is high over approximately all excess air ratio, and is improved by about 1 point with respect to the reference value.

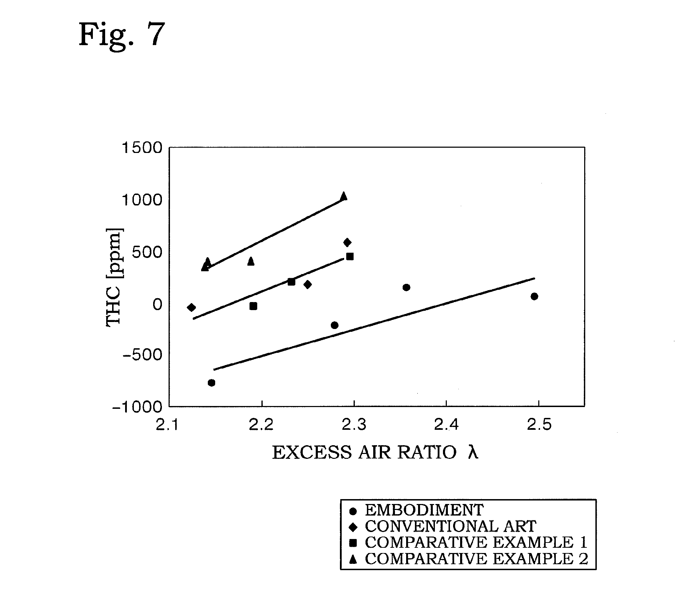

Fig. 7 shows THC (Total Hydrocarbon) density in exhaust with a difference from a reference value. As shown in Fig. 7, according to the engine of the embodiment (indicated with a black dot), in comparison with the conventional art and the comparative examples 1 and 2, the THC (Total Hydrocarbon) density in exhaust is low over approximately all excess air ratio, and reduced by about 500 ppm from the reference.

### 3. Structural Characteristic of Piston of Present Invention

In addition to the piston 2 having the structure particularly shown in the embodiment, the present inventors set various different L values with respect to the same B (220 mm in the present example), and formed plural types of pistons having different L/B values and a structure where a cooling chamber is provided in the vicinity of the peripheral groove for the top ring. The present inventors performed an experiment similar to the "2. Comparison of Engine Performance" with respect to these plural types of pistons. As a result, the condition of L/B to obtain engine performance excellent in thermal efficiency, to reduce the dead volume S and reduce the volume of uncombusted gas, in comparison with the conventional art, as described below, was determined.

That is, according to the experiment by the present inventors, when the L/B value exceeds 0.1, no significant improvement is recognized in the amount of exhausted uncombusted gas in comparison with the conventional art and the like. It can be considered that the dead volume S is unnecessarily large. Further, when the L/B value exceeds 0.1, no satisfactory improvement result can be obtained in comparison with the conventional art and the like, and agglutination of the top ring occurs.

In this manner, in a piston where plural peripheral grooves are formed in outer peripheral surface and piston rings are attached to the respective peripheral grooves, when a special structure different from the conventional structure that the top peripheral groove is provided in close vicinity to the top face of the piston and an upper cooling chamber is formed in close vicinity to the top peripheral groove is adopted, the conventional problems cannot be necessarily solved.

As a result of the above-described experiment, a further structural characteristic to obtain excellent effect in the thermal efficiency and the THC density in exhaust in comparison with the conventional art and to prevent agglutination of the top ring, i.e., a further necessary condition as an invention was determined. That is, it was proved that in the above-described special structure, as the relation between the inner diameter B of the cylinder accommodating the piston, and the distance L between the upper surface of the piston and the upper surface of the top peripheral groove, when L/B ≤ 0.1 holds, the amount of discharged uncombusted gas is reduced in comparison with the conventional art, and the thermal efficient is improved not to cause agglutination of the top ring. Note that as described above, in the embodiment of "1. Structure of Embodiment Shown in Comparison with Conventional Art", the L/B value is about 0.07 to satisfy the above-described condition, thus satisfies the above-described condition.

According to the result of the experiment performed by the present inventors, the thermal efficiency point with respect to the L/B value (value of improvement from the reference value as described in Fig. 6 represented as %) is as in the following table.

| L/B | Thermal efficiency point |
|---|---|
| 0.12 | 0 |
| 0.11 | 0.6 |
| 0.1 | 0.7 |
| 0.09 | 0.8 |
| 0.07 | 1.0 (numerical value example in embodiment) |

In this manner, the L/B value and the thermal efficiency point are in proportional relation.

Although the thermal efficiency is gradually improved by reducing the L/B value, the improvement by 0.6 point is insufficient from the viewpoint of the practical use, and 0.7 point or higher improvement is required. When the fuel economy improvement by thermal efficiency improvement and reduction of running cost by the improvement are compared with the increase in manufacturing cost of the piston to the engine by adoption of the present invention on the presumption of long-term operation, no practical benefit can be obtained from implementation of the invention unless the above-described thermal efficiency point is 0.7 or higher. When the L/B value is 0.1 or lower, the above-described thermal efficiency point is 0.7 or higher. In this case, effective thermal efficiency improvement can be attained and industrial practical effect can be obtained.

Further, according to the present inventors' knowledge, in a high efficiency gas engine having a piston with the conventional structure in which Pme (break mean effective pressure) is 1.8 MPa or higher, it is difficult to attain 0.7 or higher thermal efficiency point using other means than the present invention, and actually such gas engine does not exist. However, according to the result of experiment in the embodiment of the present invention, it was proved that, as described above, even in a high efficiency gas engine with Pme (break mean effective pressure) of 1.8 MPa or higher, the above-described thermal efficiency can be improved at 0.7 point or higher by exchanging the piston with a piston having the L/B value of 0.1 or lower as in the case of the embodiment.

### 4. Effect of Embodiment

1) According to the present embodiment, even when L/B ≤ 0.1 holds as the position of a top ring, the rated operation of the engine can be performed by enhancing top ring cooling.
2) With the above effect 1), it is possible to avoid agglutination of the top ring, and realize high pressure operation with BMEP (Break Mean Effective Pressure) of 1.8 MPa or higher, such as 2 MPa (the highest level of pressure in the world).
3) It is possible to suppress uncombusted exhaust (about 90% methane in the case of city gas), and attain fuel economy and suppress the global warming effect due to methane.

### Reference Signs List

1 ... cylinder
2 ... piston
3 ... piston ring
3a... top ring
4 ... peripheral groove
4a ... top peripheral groove
5 ... cooling chamber
5a ... upper cooling chamber
11 ... cylinder liner
22 ... piston of conventional art
32 ... piston of comparative example 1
42 ... piston of comparative example 2
S ... dead volume

## Claims

1. A piston in which a plurality of peripheral grooves in which piston rings are provided are formed in an outer peripheral surface,
wherein as relation between an inner diameter B of a cylinder accommodating the piston and a distance L between an upper surface of the piston and an upper surface of a top peripheral groove, L/B ≤ 0.1 holds, and
wherein a cooling chamber is formed in close vicinity to the top peripheral groove.

2. An engine in which a piston where a piston ring is respectively attached to a plurality of peripheral grooves formed in an outer peripheral surface is slidably provided in a cylinder,
wherein as relation between an inner diameter B of the cylinder accommodating the piston and a distance L between an upper surface of the piston and an upper surface of a top peripheral groove, L/B ≤ 0.1 holds, and
wherein a cooling chamber is formed in close vicinity to the top peripheral groove.

3. The engine according to claim 2, wherein the engine is a gas engine having a break mean effective pressure Pme of 1.8 MPa or higher.
